(19) Europäisches Patentamt / European Patent Office / Office européen des brevets

(11) EP 4 718 561 A1

(12) **EUROPEAN PATENT APPLICATION**
published in accordance with Art. 153(4) EPC

(43) Date of publication:
**01.04.2026 Bulletin 2026/14**

(21) Application number: **23940038.5**

(22) Date of filing: **05.06.2023**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2023/098308**

(87) International publication number:
**WO 2024/250144 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **REN, Jiamo**
  **Ningde, Fujian 352100 (CN)**
- **CHEN, Peipei**
  **Ningde, Fujian 352100 (CN)**
- **ZHANG, Limei**
  **Ningde, Fujian 352100 (CN)**
- **LIU, Jiao**
  **Ningde, Fujian 352100 (CN)**

(74) Representative: **Lorenz Seidler Gossel Part. mbB**
**Widenmayerstr. 23**
**80538 München (DE)**

# (54) SECONDARY BATTERY AND ELECTRIC DEVICE

(57) The present application relates to the technical field of batteries, and relates to a secondary battery and an electrical apparatus. The secondary battery includes a non-aqueous electrolyte solution containing a cyclic sulfate compound. The present application further relates to an electrical apparatus including the secondary battery.

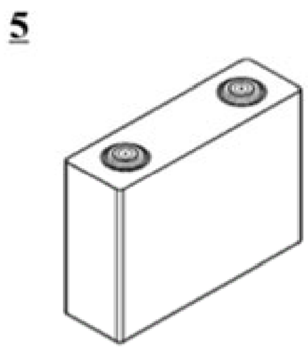


FIG. 1

EP 4 718 561 A1

## Description

### TECHNICAL FIELD

The present application relates to the technical field of batteries, and particularly relates to a secondary battery and an electrical apparatus.

### BACKGROUND

With the increasingly severe environmental problems, the pursuit of "carbon neutrality" has driven all walks of life to develop in a greener and healthier direction. As a cleaner energy storage apparatus, lithium-ion secondary batteries have begun to be widely used in energy storage power systems such as hydropower, thermal power, wind power and solar power stations, as well as electric vehicles, military equipment, aerospace and other fields. In which, the field of electric vehicles, as the main commercial field of the lithium-ion secondary batteries, has shown explosive growth since 2015, but the development of the field of electric vehicles has been greatly hindered by consumer anxiety caused by insufficient range. Improving the range is a problem to be urgently solved in this field.

### SUMMARY

The application of high energy density active materials is one of the important directions for the development of high energy density power batteries. Due to high platform voltage, high gram capacity and compacted density, ternary materials have become the first choice for some new energy vehicles that pursue range. In order to further improve the energy density, researchers have been continuously increasing the content of nickel in ternary materials, but with the increase of nickel content, the lattice stability of the materials gradually decreases, and the lattice collapse is prone to occur during high temperature or cycling, and at the same time, it is accompanied by the formation of irreversible halite and spinel phases and transition metal dissolution on the outside. The halite phase and spinel phase have lower lithium-ion conductivity, which will increase the polarization of the battery and attenuate the cycle capacity under long-term cycling. After the transition metal is dissolved, it will migrate and be deposited on the surface of a negative electrode, resulting in the increase of the surface impedance of the negative electrode and the decrease of utilization rate, thereby deteriorating the performance of the battery. In addition, in order to obtain higher energy density, a positive electrode plate containing the ternary materials adopts higher compacted density. However, higher compacted density may cause spherical positive electrode particles to be broken into smaller particles, which increases the specific surface area of a positive electrode material in contact with an electrolyte solution, thus deepening the problem of metal dissolution.

A problem to be solved by the present invention is how to reduce the problem of impedance increase and capacity attenuation caused by serious polarization of the lithium-ion secondary batteries and the destruction of the negative electrode by the transition metal during the cycling process, so as to obtain lithium-ion secondary batteries with excellent cycling performance and long life.

The present application provides a secondary battery and an electrical apparatus, aiming to solve above problems.

In a first aspect, the present application provides a secondary battery which includes a positive electrode plate and a non-aqueous electrolyte solution, in which, the non-aqueous electrolyte solution includes an additive which includes a cyclic sulfate compound having the structure shown in a general formula (I),

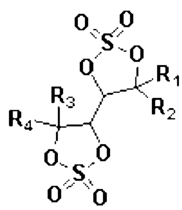

general formula (I)

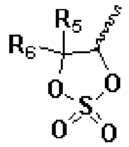

general formula (II)

in which, $R^1$, $R^2$, $R^3$ and $R^4$ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;

$R^5$ and $R^6$ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;

$R^1$ and $R^2$ are not hydrogen atoms at the same time, and $R^3$ and $R^4$ are not hydrogen atoms at the same time;

the positive electrode plate includes a positive electrode material layer containing positive electrode active materials, and the positive electrode active materials include ternary positive electrode materials; the ternary positive electrode materials are nickel-cobalt-manganese ternary materials and have the molecular formula of $Li_{1+a}[Ni_{x-}Co_yMn_zM1_bM2_c]O_{2-d}N_d$, in which, the elements M1 and M2 are independently selected from at least one of Al, Zr, Ti, Mg, Zn, B, Ca, Te, Ce, and Fe, the element N is selected from at least one of F, Cl and S, and $0.5 \le x < 1$, $0 < y \le 0.3$, $0 \le z \le 0.25$, $-0.1 < a < 0.2$, $0 \le b < 0.3$, $0 \le c < 0.3$, $0 \le d < 0.2$, $0 \le b+c < 0.3$, $x+y+z+b=1$; and

the compacted density of the positive electrode plate is larger than 3.1 $cm^3$.

In some embodiments, $R^1$, $R^2$, $R^3$ and $R^4$ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups; and

$R^5$ and $R^6$ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups.

In some embodiments, $R^1$, $R^2$, $R^3$ and $R^4$ are independently selected from any one of groups having the structure shown in the general formula (II), hydrogen atoms, halogen atoms, C1-C3 alkyl groups and cyano groups.

In some embodiments, $R^5$ and $R^6$ are independently selected from any one of hydrogen atoms and C1-C3 alkyl groups.

In some embodiments, $R^1$, $R^2$, $R^3$ and $R^4$ are independently selected from any one of groups having the structure shown in the general formula (II), hydrogen atoms, F atoms, Cl atoms, Br atoms, methyl groups, ethyl groups, propyl groups, isopropyl groups and cyano groups.

In some embodiments, $R^5$ and $R^6$ are independently selected from any one of hydrogen atoms, methyl groups, ethyl groups, propyl groups and isopropyl groups.

In some embodiments, the groups having the structure shown in the general formula (II) are selected from any one of the following groups:

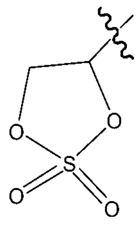 , 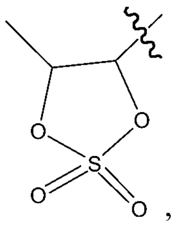 , 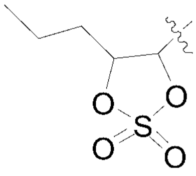 , 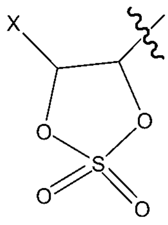 ,

in which, X refers to F atoms, Cl atoms or Br atoms.

In some embodiments, the groups having the structure shown in the general formula (II) are selected from any one of the following groups:

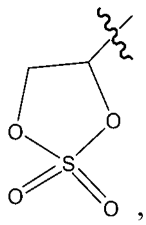 , 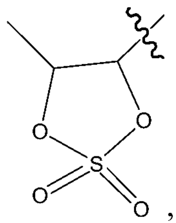 , 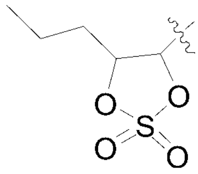 .

In some embodiments, the cyclic sulfate compound is selected from any one or more of the following compounds:

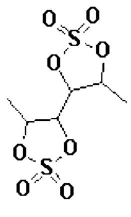 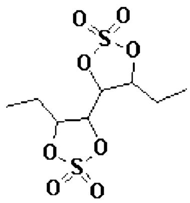 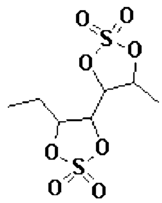 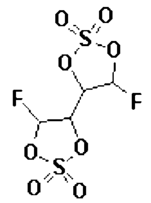 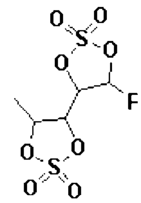

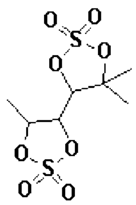 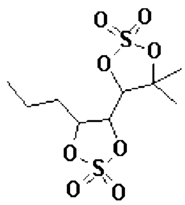 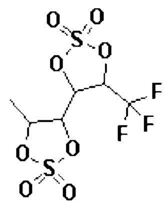 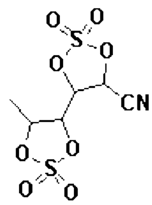 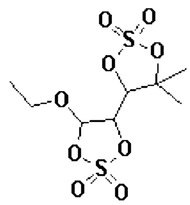

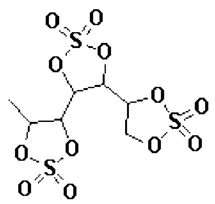 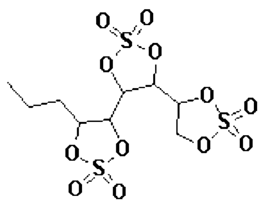 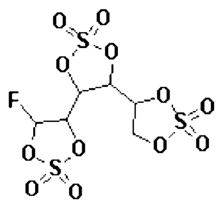 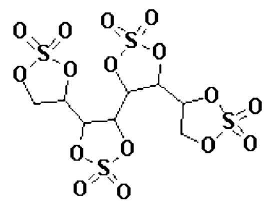

.

In some embodiments, the mass content of the cyclic sulfate compound in the non-aqueous electrolyte solution is W1, in which, $0.005\% \leq W1 \leq 10\%$, optionally, $0.05\% \leq W1 \leq 5\%$.

In some embodiments, the ternary materials have the molecular formula of $Li[Ni_xCo_yMn_z]O_2$, in which, $0.5 \leq x < 1$, $0 < y \leq 0.3$, $0 \leq z \leq 0.25$, $x+y+z=1$.

In some embodiments, the ternary materials include but are not limited to $LiNi_{0.5}Co_{0.3}Mn_{0.2}O_2$, $LiNi_{0.6}Co_{0.2}Mn_{0.2}O_2$, $LiNi_{0.8}Co_{0.1}Mn_{0.1}O_2$ and $LiNi_{0.9}Co_{0.055}Mn_{0.055}O_2$.

In some embodiments, the compacted density of the positive electrode plate is 3.3-4.1 g/cm$^3$, optionally, 3.4-3.8 g/cm$^3$.

In some embodiments, the average particle size Dv50 of the positive electrode active material is 1-25 μm; and optionally, 2μm≤Dv50≤20μm, optionally, 2μm≤Dv50≤15μm.

In a second aspect, the present application provides an electrical apparatus which includes a secondary battery, in which, the secondary battery includes any secondary battery in the first aspect.

The secondary battery provided by the present application has improved cycling performance.

## BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.

FIG. 1 is a schematic diagram of a secondary battery according to an embodiment of the present application.

FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical device using a secondary battery as a power supply according to an embodiment of the present application.

The accompanying drawings are not drawn to actual scale.

Reference numerals:

1. Battery pack; 2. Upper box; 3. Lower box; 4. Battery module; 5. Secondary battery; 51. Case; 52. Electrode assembly; 53. Top cover assembly.

## DETAILED DESCRIPTION

Embodiments of the present application are described in further detail below in conjunction with the drawings and embodiments. The detailed descriptions and accompanying drawings of the following embodiments are used for illustrating the principles of the present application, but cannot be used for limiting the scope of the present application, i.e., the present application is not limited to the embodiments described.

Embodiments of a non-aqueous electrolyte solution, a secondary battery and an electrical apparatus of the present application are specifically described below in detail with appropriate reference to the accompanying drawings. However, there may be cases where unnecessary elaboration is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

[Secondary battery]

In a first aspect, the present application provides a secondary battery which includes a positive electrode plate and a non-aqueous electrolyte solution, in which, the non-aqueous electrolyte solution includes an additive which includes a cyclic sulfate compound having the structure shown in a general formula (I),

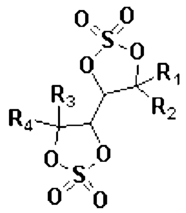

general formula (I)

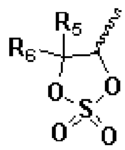

general formula (II)

in which, $R^1$, $R^2$, $R^3$ and $R^4$ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
$R^5$ and $R^6$ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;
$R^1$ and $R^2$ are not hydrogen atoms at the same time, and $R^3$ and $R^4$ are not hydrogen atoms at the same time;
the positive electrode plate includes a positive electrode material layer containing positive electrode active materials, and the positive electrode active materials include ternary positive electrode materials; the ternary positive electrode materials are nickel-cobalt-manganese ternary materials and have the molecular formula of $Li_{1+a}[Ni_xCo_yMn_zM1_bM2_c]O_{2-d}N_d$, in which, the elements M1 and M2 are independently selected from at least one of Al, Zr, Ti, Mg, Zn, B, Ca, Te, Ce, and Fe, the element N is selected from at least one of F, Cl and S, and $0.5 \leq x < 1$, $0 < y \leq 0.3$, $0 \leq z \leq 0.25$, $-0.1 < a < 0.2$, $0 \leq b < 0.3$, $0 \leq c < 0.3$, $0 \leq d < 0.2$, $0 \leq b+c < 0.3$, $x+y+z+b=1$; and
the compacted density of the positive electrode plate is larger than 3.1 $cm^3$.

The secondary battery is also called as a rechargeable battery or a storage battery, which refers to a battery that, after being discharged, can activate an active material by charging for continued use. Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution is located between the positive electrode plate and the negative electrode plate, and mainly plays a role in conducting the active ions.

As described above, the ternary materials inherently have the problems of increasing of circulating impedance, transition metal dissolution and the like, and after high compacted density is adopted to improve the energy density, the damage of the transition metal to the negative electrode may also be aggravated. In the present invention, cyclic sulfate is adopted as an electrolyte solution additive to participate in film formation of a positive electrode interface and a negative electrode interface in the first charging process, the main component for forming the film on the positive electrode interface is an alkyl lithium sulfate organic lithium compound, and the main components for forming the film on the negative electrode interface are lithium sulfite and a polymer similar to polyethylene oxide (PEO). The additive can reduce the impedance of film formation on the positive electrode interface and the negative electrode interface, and generate a more stable inorganic and organic mixed SEI film with higher barrier capacity, thus protecting the negative electrode from being damaged by the transition metal; and moreover, the additive can also reduce the generation of halite phase and spinel on the positive electrode interface, thereby avoiding the increase of battery polarization, further reducing the increase of

impedance in the circulating process, and greatly improving the cycling performance of a battery cell.

[Non-aqueous electrolyte solution]

In the present application, the secondary battery includes the non-aqueous electrolyte solution which includes the additive, and the additive includes the cyclic sulfate compound having the structure shown in the general formula (I). The cyclic sulfate rings in the general formula (I) are all five-membered rings, which can form a more dense SEI film.

In the general formula (I), $R^1$, $R^2$, $R^3$ and $R^4$ can be alkyl groups or F- or N-containing substituent groups; alkyl substituent groups and the like can be introduced to generate an elastic SEI film with a longer organic chain at the negative electrode, and therefore, the change in volume of the negative electrode in the cycling process can be solved, and the damage to the SEI film can be avoided; the F- and N-containing substituent groups can be introduced to participate in film formation at the negative electrode, and the SEI film rich in LiF, $Li_3N$ and more inorganic components can be generated, the mechanical strength of the SEI film is improved, furthermore, the stability of the SEI film at the negative electrode is improved, and the purpose of further improving the cycling performance of the battery is further improved.

The alkyl groups can be linear alkyl groups, branched alkyl groups or naphthenic base, including but not limited to methyl groups, ethyl groups, propyl groups, isopropyl groups, N-butyl groups, isobutyl groups, cyclopropanealkyl groups, cyclobutyl groups and the like; the alkyl groups in the halogenated alkyl groups include but are not limited to linear alkyl groups, branched alkyl groups or naphthenic base, such as methyl groups, ethyl groups, propyl groups, isopropyl groups, N-butyl groups, isobutyl groups, cyclopropanealkyl groups, cyclobutyl groups and the like; the halogen atoms can be fluorine atoms, chlorine atoms or bromine atoms, and the halogen atoms substitute any one or more hydrogen atoms on the alkyl groups; the alkoxy groups include but are not limited to cyclopropanealkyl groups, oxetanyl groups and the like; the halogen atoms in the haloalkoxy groups can be fluorine atoms, chlorine atoms or bromine atoms, and the halogen atoms substitute any one or more hydrogen atoms on the alkoxy groups; the alkenyl groups include but are not limited to $-CH=CH_2$, $-CH=CH_2CH_3$, $-CH_2CH=CH_2$, and $-CH_2CH=CH_2CH_3$; and the ester groups include but are not limited to methyl formate groups, ethyl formate groups, ethyl acetate groups, methyl propionate groups, ethyl propionate groups, propyl propionate groups and the like.

In some embodiments, $R^1$, $R^2$, $R^3$ and $R^4$ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups; and

$R^5$ and $R^6$ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups.

In some embodiments, $R^1$, $R^2$, $R^3$ and $R^4$ are independently selected from any one of groups having the structure shown in the general formula (II), hydrogen atoms, halogen atoms, C1-C3 alkyl groups and cyano groups.

In some embodiments, $R^5$ and $R^6$ are independently selected from any one of hydrogen atoms and C1-C3 alkyl groups.

In some embodiments, $R^1$, $R^2$, $R^3$ and $R^4$ are independently selected from any one of groups having the structure shown in the general formula (II), hydrogen atoms, F atoms, Cl atoms, Br atoms, methyl groups, ethyl groups, propyl groups, isopropyl groups and cyano groups.

In some embodiments, $R^5$ and $R^6$ are independently selected from any one of hydrogen atoms, methyl groups, ethyl groups, propyl groups and isopropyl groups.

In some embodiments, the groups having the structure shown in the general formula (II) are selected from any one of the following groups:

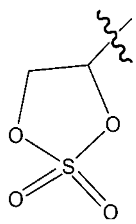 , 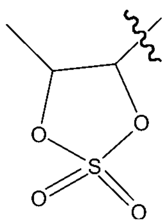 , 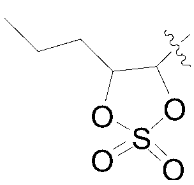 , 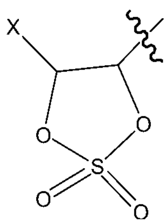 ,

in which, X refers to F atoms, Cl atoms or Br atoms.

In some embodiments, the groups having the structure shown in the general formula (II) are selected from any one of the following groups:

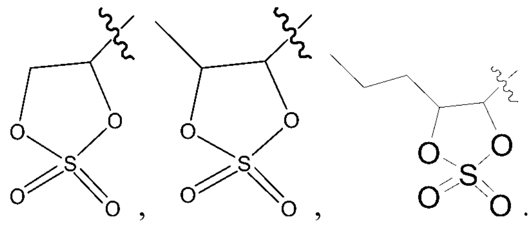

In some embodiments, the cyclic sulfate compound is selected from any one or more of the following compounds:

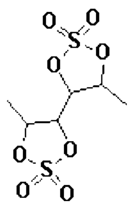
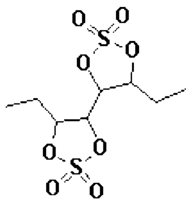
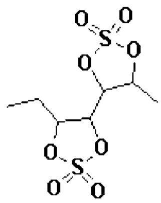
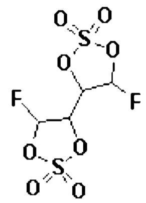
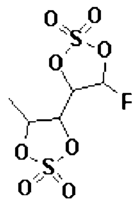
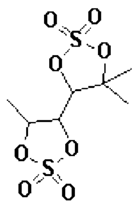
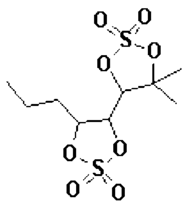
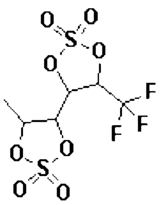
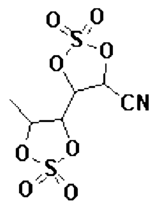
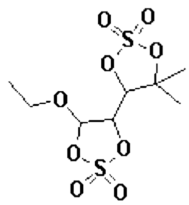
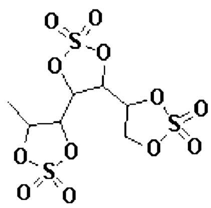
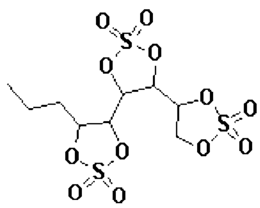
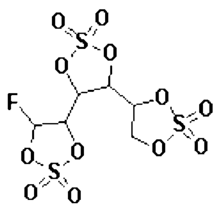
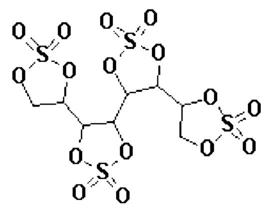

.

A preparation method of the cyclic sulfate compound is simpler, and it is easier to popularize and implement in industry, and has a more stable effect of improving the cycling performance of the secondary battery.

In some embodiments, $R^1$, $R^2$, $R^3$, $R^4$, $R^5$ and $R^6$ meet the following conditions:

$R^1$ and $R^2$ are hydrogen atoms at the same time, one of $R^3$ and $R^4$ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups, and $R^5$ and $R^6$ in the groups having the structure shown in the general formula (II) are not hydrogen atoms at the same time.

In some embodiments, $R^1$, $R^2$, $R^3$, $R^4$, $R^5$ and $R^6$ meet the following conditions:

$R^3$ and $R^4$ are hydrogen atoms at the same time, one of $R^1$ and $R^2$ is the hydrogen atoms, and the other one is any one of groups having the structure shown in the general formula (II), halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups, and $R^5$ and $R^6$ in the groups having the structure shown in the general formula (II) are not hydrogen atoms at the same time.

In some embodiments, $R^5$ and $R^6$ are independently selected from groups other than the groups having the structure shown in the general formula (II).

In the present invention, the content of the cyclic sulfate compound in the non-aqueous electrolyte solution can be random content. In some embodiments, the mass content of the cyclic sulfate compound in the non-aqueous electrolyte solution is W1, in which, $0.005\% \leq W1 \leq 10\%$, optionally, $0.05\% \leq W1 \leq 5\%$. The cyclic sulfate compound in the above content range has an obvious effect of improving the cycling performance, and the battery cell has relatively good performance.

In some embodiments, W1 can be less than 0.001%, or 0.001%-0.005%, 0.005%-0.01%, 0.01%-0.05%, 0.05%-1%, 1%-2%, 2%-3%, 3%-5%, 5%-8%, 8%-10%, and 10%-15%, or greater than 15%.

In some embodiments, the non-aqueous electrolyte solution adopted in the present invention also includes an electrolyte, and any electrolyte which can be usually used in the non-aqueous electrolyte solution can be considered to be applied to the non-aqueous electrolyte solution in the present application. Those skilled in the art can select according to a battery system in which the non-aqueous electrolyte solution is applied, for example, a conventional electrolyte suitable for the secondary battery is selected. In some embodiments, the electrolyte includes an alkali metal salt electrolyte; optionally, the electrolyte includes lithium salt; and optionally, the lithium salt includes one or more selected from a group consisting of lithium hexafluorophosphate, lithium perchlorate, lithium hexafluoroarsenate, lithium bis(fluorosulfonyl)imide and lithium bis(trifluoromethanesulfonyl)imide. The lithium salt or sodium salt can be used independently, and can also be used by mixing two or more than two.

The content of the electrolyte in the non-aqueous electrolyte solution can refer to the content of the electrolyte in the conventional non-aqueous electrolyte solution; and in some embodiments, the content of the electrolyte in the non-aqueous electrolyte solution is 0.1-5 mol/L, for example, 0.1 mol/L, 0. 3 mol/L, 0.5 mol/L, 0.6 mol/L, 0.7 mol/L, 0.8 mol/L, 0.9 mol/L, 1 mol/L, 1.5 mol/L, 2 mol/L, 2.5 mol/L, 3 mol/L, 4 mol/L or 5 mol/L.

In some embodiments, the non-aqueous electrolyte solution further includes a non-aqueous solvent, and optionally, the non-aqueous solvent includes any one or more selected from a group consisting of cyclic carbonate, chain carbonate, a nitrile solvent, a ketone solvent and a sulfone solvent; and further optionally, the non-aqueous solvent includes one or more selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, ethyl sulfone, tetrahydrofuran, ethylene glycol dimethyl ether, dioxolane, acetone, acetonitrile and butyronitrile. The non-aqueous solvent can be used independently or used in a manner of mixing two or more, for example, in order to improve the load characteristic and low-temperature characteristic of the secondary battery, a mixed solvent of cyclic carbonate and chain carbonate can be adopted. In some embodiments, EC+EMC (ethylene carbonate + methyl ethyl carbonate) is adopted as the non-aqueous solvent.

When the non-aqueous electrolyte solution in the present application is applied to a solid battery, a solid solvent such as dimethyl sulfone can be adopted.

In addition to the above additives, the additives can further include a negative electrode film-forming additive and a positive electrode film-forming additive, and can further include additives that can improve certain performances of the battery, such as an additive that can improve the overcharge performance of the battery, an additive that can improve the high-temperature or low-temperature performance of the battery. In some embodiments, the additives further include but are not limited to one or more selected from a group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound and a carboxylate compound.

[Preparation method of cyclic sulfate compound having structure shown in general formula (I)]

In the present application, a preparation method of the cyclic sulfate compound having the structure shown in the general formula (I) refers to the following synthetic route:

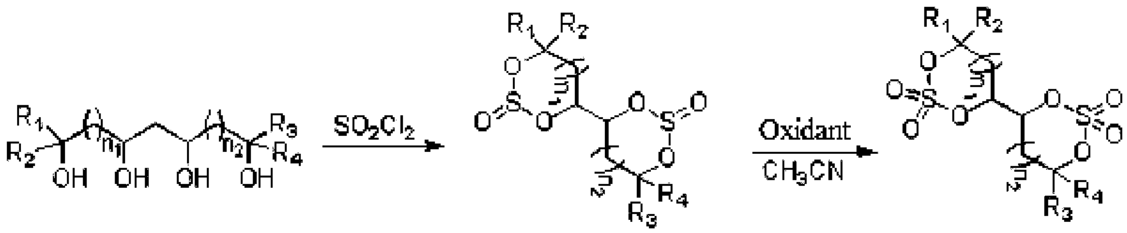


in which, the reaction temperature in the first step is controlled to be 30-60°C; the reaction temperature in the second step is controlled to be 10-30°C, and in the second step, a catalyst such as ruthenium trichloride trihydrate is used for catalysis, and an oxidant can be sodium hypochlorite, ozone and the like.

[Positive electrode plate]

The secondary battery provided by the present invention includes a positive electrode plate which includes a positive electrode material layer containing positive electrode active materials; and the positive electrode active materials

include nickel-cobalt-manganese ternary materials which have the molecular formula of $Li_{1+a}[Ni_xCo_yMn_zM1_bM2_c]O_{2-d}N_d$, in which, the elements M1 and M2 are independently selected from at least one of Al, Zr, Ti, Mg, Zn, B, Ca, Ce, Te, and Fe, the element N is selected from at least one of F, Cl and S, and $0.5 \leq x<1$, $0<y\leq 0.3$, $0\leq z\leq 0.25$, $-0.1<a<0.2$, $0\leq b<0.3$, $0\leq c<0.3$, $0\leq d<0.2$, $0\leq b+c<0.3$, $x+y+z+b=1$.

In some embodiments, the ternary materials have the molecular formula of $Li[Ni_xCo_yMn_z]O_2$, in which, $0.5\leq x<1$, $0<y\leq 0.3$, $0\leq z\leq 0.25$, $x+y+z=1$.

In some embodiments, the ternary materials include but are not limited to $LiNi_{0.5}Co_{0.3}Mn_{0.2}O_2$, $LiNi_{0.6}Co_{0.2}Mn_{0.2}O_2$, $LiNi_{0.8}Co_{0.1}Mn_{0.1}O_2$ and $LiNi_{0.9}Co_{0.055}Mn_{0.055}O_2$.

The cyclic sulfate compound is added to a system with the ternary materials, so that the effects of relieving the increase of cycle impedance of lithium ions and improving the cycling performance can be achieved.

As described above, in order to obtain higher energy density, a positive electrode plate containing the ternary materials adopts higher compacted density. However, higher compacted density may cause spherical positive electrode particles to be broken into smaller particles, which increases the specific surface area of a positive electrode material in contact with an electrolyte solution, thus deepening the problem of metal dissolution. The cyclic sulfate compound is added to the electrolyte solution to assist in solving of this problem.

In the present invention, the cyclic sulfate compound additive may be suitable for the secondary battery with high compacted density (for example, the compacted density is greater than 3.1 $cm^3$) of the positive electrode plate.

In some embodiments, the compacted density of the positive electrode plate is 3.3-4.1 g/$cm^3$, optionally, 3.4-3.8 g/$cm^3$, for example, 3.3-3.4 g/$cm^3$, 3.4-3.45 g/$cm^3$, 3.45-3.5 g/$cm^3$, 3.5-3.6 g/$cm^3$, 3.6-3.7 g/$cm^3$, 3.7-3.8 g/$cm^3$, 3.8-3.9 g/$cm^3$, 3.9-4.0 g/$cm^3$ or 4.0-4.1 g/$cm^3$.

The compacted density can be measured by a compacted density instrument, and the measurement method can be a method commonly used in the field or a method described in the specification of the compacted density instrument.

The influence of particle size distribution of the ternary materials on compacted density is related to the spherical morphology of the ternary materials; there will be a large number of gaps between spheres when isometric spheres are stacked, and if there are no proper small particles to fill these gaps, the stacking density will be very low, and therefore, proper particle size distribution can improve the compacted density of the materials. The particle size of the materials can be represented with Dv50, and Dv50 refers to the corresponding particle size when the cumulative volume percentage reaches 50%, namely the median particle size in volume distribution. In some embodiments, the average particle size Dv50 of the positive electrode active material adopted in the present invention is 1-25 μm; and optionally, $2\mu m\leq Dv50\leq 20\mu m$, and optionally, $2\mu m\leq Dv50\leq 15\mu m$. When the Dv50 of the positive electrode active material is within the above preferred range, the polarization of the positive electrode can be reduced under the condition of ensuring high compacted density, thereby ensuring high battery performance.

In some embodiments, Dv50 can be less than 0.5 μm, or 0.5-1 μm , 1-1.5 μm, 1.5-2 μm, 2-5 μm, 5-10 μm, 10-15 μm, 15-18 μm, 18-20 μm, 20-22 μm, 22-25 μm, and 25-30 μm, or greater than 30 μm.

DV50 can be measured by instruments and methods that are well known in the art. For example, a laser diffraction particle size distribution measurement apparatus (Malvern Mastersizer 3000) of Malvern Instruments Co., Ltd. can be used for testing, and the particle size distribution is measured according to the particle size distribution laser diffraction method GB/T19077-2016, and thus Dv50 is obtained.

The positive electrode plate generally includes a positive electrode current collector and a positive electrode material layer arranged on at least one surface of the positive electrode current collector.

As an example, the positive electrode current collector has two opposite surfaces in the thickness direction, and the positive electrode material layer is arranged on any one or both of the two opposite surfaces of the positive electrode current collector.

In some embodiments, the positive electrode current collector can be a metal foil or a composite current collector. For example, an aluminum foil may be used as the metal foil. The composite current collector may comprise a polymer material substrate layer and a metal layer formed on at least one surface of the polymer material substrate layer. The composite current collector can be formed by forming a metal material (aluminum, aluminum alloy, nickel alloy, titanium, titanium alloy, silver, silver alloy and the like) on a polymer material substrate material (such as polypropylene (PP), polyethylene glycol terephthalate (PET), polybutylene terephthalate (PBT), Polystyrene (PS), Polyethylene (PE) and the like).

In some embodiments, the positive electrode material layer can also include other positive electrode active materials. The positive electrode active materials which are known in the field and are used for the battery can be adopted. As an example, the positive electrode active materials can include at least one of the following materials: lithium-containing phosphate of an olivine structure, lithium transition metal oxides and modified compounds thereof. However, the present application is not limited to these materials, and other conventional materials that can be used as positive electrode active materials for batteries may also be used. Only a single one of or a combination of two or more of these positive electrode active materials can be used. Examples of lithium transition metal oxides may include, but are not limited to, at least one of a lithium-cobalt oxide (such as $LiCoO_2$), a lithium-nickel oxide (such as $LiNiO_2$), a lithium-manganese oxide (such as

$LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), a lithium-nickel-cobalt-aluminum oxide (such as $LiNi_{0.85}Co_{0.15}Al_{0.05}O_2$), and a modified compound thereof. Examples of lithium-containing phosphates of olivine structure may comprise, but are not limited to, at least one of lithium iron phosphate (e.g., $LiFePO_4$ (also abbreviated as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer optionally includes the binder. As an example, the binder can include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine~ acrylate resin.

In some embodiments, the positive electrode film layer also optionally includes the conductive agent. As an example, the conductive agent can include at least one of superconducting carbon, acetylene black, carbon black, Ketjen black, carbon dots, carbon nanotubes, graphene and carbon nanofibers.

In some embodiments, the positive electrode plate can be prepared by the following steps: dispersing the components for preparing the positive electrode plate, such as the positive electrode active material, the conductive agent, the binder and any other component, in a solvent (such as N~ pyrrolidone) to form positive electrode slurry; and coating a positive electrode current collector with the positive electrode slurry performing drying, cold pressing and other processes to obtain the positive electrode plate.

[Negative electrode plate]

In the present invention, the secondary battery can also include a negative electrode plate. The negative electrode plate generally includes a negative electrode current collector and a negative electrode film layer (negative electrode material layer) arranged on at least one surface of the negative electrode current collector, and the negative electrode material layer includes negative electrode active materials.

As an example, the negative electrode current collector has two opposite surfaces in the thickness direction, and the negative electrode material layer is arranged on any one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material which is known in the field and used for the battery. As an example, the negative electrode active material can include at least one of the following materials: graphite (artificial graphite, and natural graphite), soft carbon, hard carbon, a silicon-based material, a tin-based material, lithium titanate and the like. The silicon-based material can include at least one of monatomic silicon, a silicon-oxygen compound, a silicon-carbon compound, a silicon-nitrogen compound and a silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally include a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative

electrode slurry on the negative electrode current collector, and performing drying and cold pressing processes to obtain the negative electrode plate.

[Separator]

In some embodiments, the secondary battery further comprises a separator. The type of the separator is not particularly limited in the present application, and any well-known separator with a porous structure having good chemical stability and mechanical stability can be selected.
In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.
In some embodiments, the positive electrode plate, the negative electrode plate, and the separator can be made into an electrode assembly by a winding process or a lamination process.
In some embodiments, the secondary battery can comprise an outer package. The outer packaging can be used for encapsulating the above electrode assembly and electrolyte.
In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.
The shape of the secondary battery is not particularly limited in the present application, and may be a cylinder, a square, or any other shape. For example, FIG. 1 shows a secondary battery 5 with a square structure as an example.
In some embodiments, referring to FIG. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.
In some embodiments, the secondary batteries may be assembled into a battery module, the number of secondary batteries comprised in the battery module may be one or more, and the specific number may be selected by those skilled in the art according to the application and capacity of the battery module.
Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.
Optionally, the battery module 4 may further comprise a shell having an accommodating space, in which the plurality of secondary batteries 5 is accommodated.
In some embodiments, the above battery modules may be further assembled into a battery pack, the number of battery modules included in the battery pack may be one or more, and the specific number may be selected by those skilled in the art based on the application and capacity of the battery pack.
Figs. 4 and 5 show a battery pack 1 as an example. Referring to FIGs. 4 and 5, the battery pack 1 may comprise a battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.
In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may comprise, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.
For the electrical apparatus, the secondary battery, the battery module, or the battery pack may be selected according to its use requirements.
Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

Examples

Examples of the present application will be described below. The embodiments described below are illustrative and only used to explain the present application, and cannot be construed as limiting the present application. If the specific technology or conditions are not indicated in the embodiments, the technology or conditions described in the literature in the art or in accordance with the product specification shall be followed. If the manufacturer of the agents or instruments used is not indicated, they are all conventional products that can be obtained through commercial purchase, and the rest of the agents or compound information are recorded in Table 1.

Table 1

| Materials | Structural formula | CAS No. |
|---|---|---|
| 1,6-dideoxygalactitol | 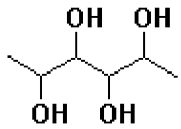 | 25289-20-7 |
| 3,4,5,6-octaerythriol | 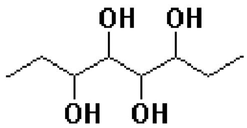 | 2165939-88-6 |
| 2,3,4,5-heptaerythriol | 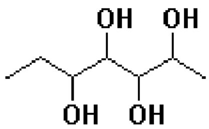 | 2629309-49-3 |
| Compound 8 | 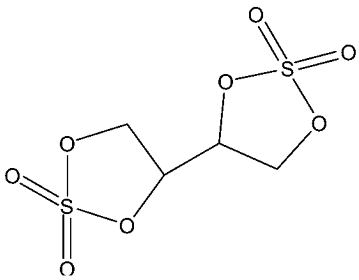 | 1431298-10-0 |

**Synthesis examples**

In the present application, a preparation method of a cyclic sulfate compound having the structure shown in a general formula (I) refers to the following synthetic route:

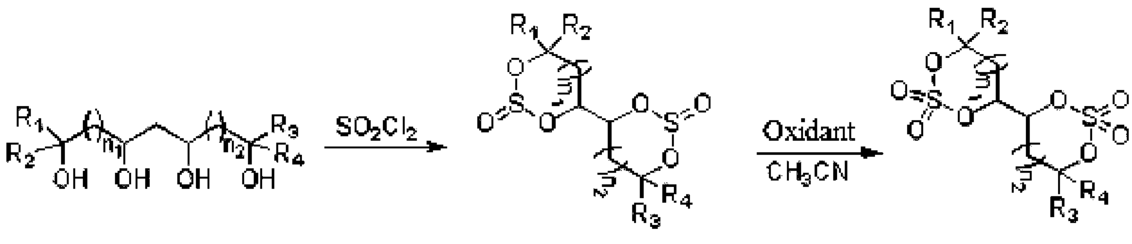


in which, the reaction temperature in the first step is controlled to be 30-60°C; the reaction temperature in the second step is controlled to be 10-30°C, and in the second step, a catalyst such as ruthenium trichloride trihydrate is used for catalysis, and an oxidant can be sodium hypochlorite, ozone and the like.

Synthesis example 1: Synthesis of compound 1

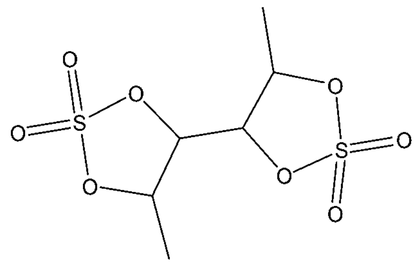

Step 1: adding 300 g (2 mol) of solid 1,6-dideoxygalactitol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 1.

Step 2: adding 184.2 g (0.8 mol) of the intermediate product 1 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain a white solid powder, namely the compound 1. 1H-NMR, $CD_3CN$, $\delta$ ppm 5.42-5.39 (m, 2H), 5.36-5.34 (m, 2H), 1.67-1.65 (d, 6H).

Synthesis example 2: Synthesis of compound 2

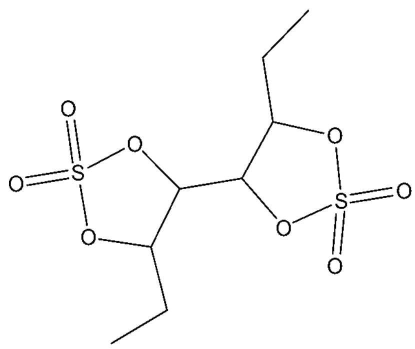

Step 1: adding 356.5 g (2 mol) of solid 3,4,5,6-octaerythriol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 2.

Step 2: adding 216.2 g (0.8 mol) of the intermediate product 2 to a 3L three-necked flask; adding 1000 mL of acetonitrile; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 2.

Synthesis example 3: Synthesis of compound 3

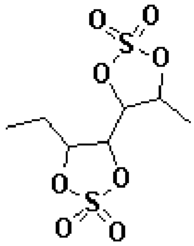

Step 1: adding 328.4 g (2 mol) of solid 2,3,4,5-heptaerythriol to a 5L three-necked flask; starting stirring; adding dropwise 523 g (4.4 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 3.

Step 2: adding 205 g (0.8 mol) of the intermediate product 3 to a 3L three-necked flask; adding 1000 mL of acetonitrile; stirring until the solid is completely dissolved; adding 80 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 3 (163.1 g, yield: 82.8%).

In addition, the synthesis method of the following compounds refers to the Synthesis Example 1, and a corresponding substrate in Table 2 was adopted to replace 1,6-dideoxygalactitol.

Table 2

| Compound | Chemical formula | Substrate | Compound LC-MS |
|---|---|---|---|
| 4 | 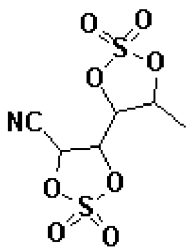 | 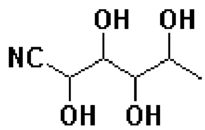 CAS No. : 7460-93-7 | 285.25 |

Synthesis example 4: Synthesis of compound 5

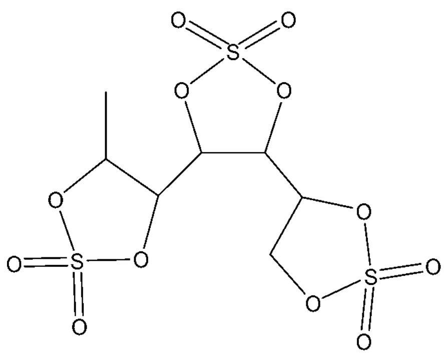

Step 1: adding 392.4 g (2 mol) of solid 1,2,3,4,5.6-heptahexanol to a 5L three-necked flask; starting stirring; adding dropwise 784.5 g (6.6 mol) of thionyl chloride to the three-necked flask, in which, the temperature was controlled at about 15°C in the adding dropwise process; reacting at temperature maintained at 45°C for 4 h after adding dropwise, in

which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 4.

Step 2: adding 140 g (0.4 mol) of the intermediate product 4 to a 4L three-necked flask; adding 1000 mL of acetonitrile; adding 110 mg of a ruthenium trichloride trihydrate catalyst; cooling the system to 20°C after nitrogen replacement; starting stirring; adding dropwise 1500 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 5.

In addition, the synthesis method of the following compounds refers to the Synthesis Example 4, and a corresponding substrate in Table 3 was adopted to replace 1,2,3,4,5.6-heptahexanol.

Table 3

| Compound | Chemical formula | Substrate | Compound LC-MS |
|---|---|---|---|
| 6 | 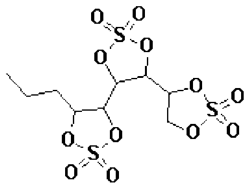 | 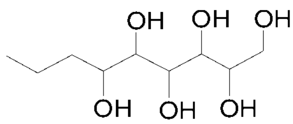 CAS No. : 2236586-56-2 | 410.38 |

Synthesis example 5: Synthesis of compound 7

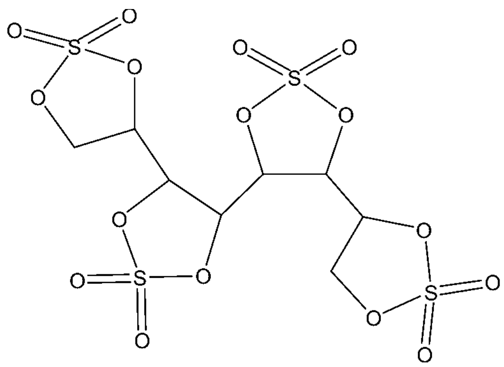

Step 1: adding 484 g (2 mol) of solid octitol to a 5L three-necked flask; starting stirring; adding dropwise 1046 g (8.8 mol) of thionyl chloride to the three-necked flask, in which, the temperature was controlled at about 15°C in the adding dropwise process; reacting at temperature maintained at 45°C for 4 h after adding dropwise, in which, a large amount of pasty solids were separated out from the reaction liquid; slowly adding dropwise 1 L of deionized water after cooling; quickly stirring and scattering the reaction system; pulping and washing the solids obtained by filtering with deionized water for multiple times until the pH was neutral; and drying the filter cake at 60°C under reduced pressure to obtain an intermediate product 5.

Step 2: adding 183.2 g (0.4 mol) of the intermediate product 5 to a 4L three-necked flask; adding 1000 mL of acetonitrile; adding 150 mg of a ruthenium trichloride trihydrate catalyst; cooling the system to 20°C after nitrogen replacement; starting stirring; adding dropwise 2000 g of 20% sodium hypochlorite aqueous solution within 1 h; controlling the reaction temperature at 10-20°C; stirring at 10-20°C for 10 min after adding dropwise; separating the liquid; quenching the organic phase with a sodium sulfite aqueous solution until potassium iodide-starch test paper was not blue; separating the liquid again; concentrating the organic layer; and crystallizing with acetonitrile to obtain the compound 7.

Example 1

Electrolyte solution: the compound 1 was used as an additive, which had the mass content in the electrolyte solution of 2%; $LiPF_6$ was used as an electrolyte, which had the content in the electrolyte solution of 10%, and a mixture of

EC + EMC (ethylene carbonate + methyl ethyl carbonate) with a volume ratio of 3:7 was used as the solvent.

Preparation of positive electrode plate:

A positive electrode active material $LiNi_{0.5}Co_{0.3}Mn_{0.2}O_2$ (average particle size Dv50 of 8 μm), a conductive agent acetylene black and a binder polyvinylidene fluoride (PVDF) were dissolved in a solvent N-methyl pyrrolidone (NMP) according to a weight ratio of 97:1:2, and were fully stirred and mixed uniformly to obtain positive electrode slurry; then the positive electrode slurry was uniformly coated on a positive electrode current collector; and then drying, cold pressing and slitting were carried out to obtain the positive electrode plate. The compacted density of the positive electrode plate was 3.45 g/cm$^3$.

Dv50 of the positive electrode active material refers to the corresponding particle size when the cumulative volume percentage reaches 50%, namely the median particle size in the volume distribution, and the unit is μm. DV50 can be measured by instruments and methods that are well known in the art. For example, a laser diffraction particle size distribution measurement apparatus (Malvern Mastersizer 3000) of Malvern Instruments Co., Ltd. can be used for testing, and the particle size distribution is measured according to the particle size distribution laser diffraction method GB/T19077-2016, and thus Dv50 is obtained.

The compacted density of the positive electrode plate can be measured by a compacted density instrument.

Preparation of negative electrode plate:

A negative electrode active material graphite, a conductive agent carbon black, a binder butadiene styrene rubber (SBR) and a thickener sodium carboxymethyl cellulose (CMC-Na) were dissolved in deionized water according to a weight ratio of 90:4:4:2, and were mixed uniformly to prepare negative electrode slurry; and the negative electrode slurry was uniformly coated on copper foil of a negative electrode current collector once or multiple times, and drying, cold pressing and slitting were carried out to obtain the negative electrode plate.

Separator:

A conventional polypropylene film was used as the separator.

Assembling of lithium-ion battery:

The positive electrode plate, the separator and the negative electrode plate were sequentially stacked, the separator was positioned between the positive electrode plate and the negative electrode plate to play a separating role, and then the positive electrode plate, the isolating film and the negative electrode plate were wound to obtain an electrode assembly; and the electrode assembly was placed in a battery shell, the electrolyte solution was injected after drying, and then the lithium-ion battery was manufactured by processes such as formation and standing.

Example 2-1

The compound 1 was replaced by the compound 2, and the rest was the same as that in the Example 1.

Example 2-2

The compound 1 was replaced by the compound 3, and the rest was the same as that in the Example 1.

Example 2-3

The compound 1 was replaced by the compound 4, and the rest was the same as that in the Example 1.

Example 2-4

The compound 1 was replaced by the compound 5, and the rest was the same as that in the Example 1.

Example 2-5

The compound 1 was replaced by the compound 6, and the rest was the same as that in the Example 1.

Example 2-6

The compound 1 was replaced by the compound 7, and the rest was the same as that in the Example 1.

Example 3-1

The mass content of the compound 1 was adjusted to be 0.001%, and the rest was the same as that in the Example 1.

Example 3-2

The mass content of the compound 1 was adjusted to be 0.01%, and the rest was the same as that in the Example 1.

Example 3-3

The mass content of the compound 1 was adjusted to be 3%, and the rest was the same as that in the Example 1.

Example 3-4

The mass content of the compound 1 was adjusted to be 8%, and the rest was the same as that in the Example 1.

Example 3-5

The mass content of the compound 1 was adjusted to be 15%, and the rest was the same as that in the Example 1.

Example 4-1

The positive electrode active material $LiNi_{0.5}Co_{0.3}Mn_{0.2}O_2$ was replaced by a positive electrode active material $LiNi_{0.6}Co_{0.2}Mn_{0.2}O_2$, and the rest was the same as that in the Example 1.

Example 4-2

The positive electrode active material $LiNi_{0.5}Co_{0.3}Mn_{0.2}O_2$ was replaced by a positive electrode active material $LiNi_{0.8}Co_{0.1}Mn_{0.1}O_2$, and the rest was the same as that in the Example 1.

Example 4-3

The positive electrode active material $LiNi_{0.5}Co_{0.3}Mn_{0.2}O_2$ was replaced by a positive electrode active material $LiNi_{0.9}Co_{0.055}Mn_{0.055}O_2$, and the rest was the same as that in the Example 1.

Example 5-1

The average particle size of the positive electrode active material was adjusted to be 0.5 μm, and the rest was the same as that in the Example 1.

Example 5-2

The average particle size of the positive electrode active material was adjusted to be 1.5 μm, and the rest was the same as that in the Example 1.

Example 5-3

The average particle size of the positive electrode active material was adjusted to be 5 μm, and the rest was the same as that in the Example 1.

Example 5-4

The average particle size of the positive electrode active material was adjusted to be 18 μm, and the rest was the same as that in the Example 1.

Example 5-5

The average particle size of the positive electrode active material was adjusted to be 22 μm, and the rest was the same as that in the Example 1.

Example 5-6

The average particle size of the positive electrode active material was adjusted to be 30 μm, and the rest was the same as that in the Example 1.

Contrast Example 1-1

The compound 1 was not added, and the rest was the same as that in the Example 1.

Contrast Example 1-2

The compound 1 was replaced by the compound 8, and the rest was the same as that in the Example 1.

Contrast Example 1-3

The compound 1 was not added, the positive electrode active material $LiNi_{0.5}Co_{0.3}Mn_{0.2}O_2$ was replaced by the positive electrode active material $LiNi_{0.6}Co_{0.2}Mn_{0.2}O_2$, and the rest was the same as that in the Example 1.

Contrast Example 1-4

The compound 1 was not added, the positive electrode active material $LiNi_{0.5}Co_{0.3}Mn_{0.2}O_2$ was replaced by the positive electrode active material $LiNi_{0.8}Co_{0.1}Mn_{0.1}O_2$, and the rest was the same as that in the Example 1.

Contrast Example 1-5

The compound 1 was not added, the positive electrode active material $LiNi_{0.5}Co_{0.3}Mn_{0.2}O_2$ was replaced by the positive electrode active material $LiNi_{0.9}Co_{0.055}Mn_{0.055}O_2$, and the rest was the same as that in the Example 1.

1) Test of cycling performance at 45°C

At the temperature of 45°C, the lithium-ion battery was charged at constant current of 1 C until the voltage was 4.25 V, and then was charged at constant voltage of 4.25 V until the current was ≤0.05C, after standing for 5 min, the lithium-ion battery was discharged at constant current of 1 C until the voltage was 2.8 V, this process was a charge-discharge cycle process, and the discharge capacity in this process was the discharge capacity of the first cycle. The lithium-ion battery was subjected to repeated charge-discharge cycle tests according to the above method until the discharge capacity of the lithium-ion secondary battery was attenuated to 80%, and the number of cycles of the lithium-ion battery was recorded.

Capacity retention ratio (%) of battery after N time cycles at 45°C (%) = (discharge capacity of Nth cycle of battery/discharge capacity of 1st cycle of battery) × 100%.

2) DCR growth rate after cycle at 45°C

At room temperature, the lithium-ion battery was charged to 4.25 V at constant current of 1 C, and then was charged to 0.05 C at constant voltage of 4.25 V. After being fully charged, the battery stood for 5 min, then was discharged for 30 min at 1 C (the charge capacity of a battery cell was 50% SOC), and then stood for 5 min. The temperature was adjusted to be 25°C, the battery stood for 1 h, and the voltage V1 of the battery cell at the moment was recorded. The battery was discharged for 30 sec at 4 C, the voltage V2 after pulse discharge was recorded, and when the battery cell was discharged for 30 sec at 50% SOC, DCR = (V1-V2)/I, I =4C. DCR growth rate after battery cycles to 80% at 45°C = (DCR

after battery stores and cycles to 80% / DCR before battery cycles) × 100%.

The test result is recorded in Table 4.

Table 4

| | DCR growth rate after cycle at 45°C | Number of cycles of lithium-ion battery with cycle capacity retention rate reaching 80% at 45°C |
|---|---|---|
| Example 1 | 16.6% | 2286 |
| Example 2-1 | 17.4% | 2186 |
| Example 2-2 | 18.3% | 2056 |
| Example 2-3 | 21.3% | 2173 |
| Example 2-4 | 16.9% | 1973 |
| Example 2-5 | 19.0% | 2034 |
| Example 2-6 | 20.4% | 2129 |
| Example 3-1 | 27.0% | 1767 |
| Example 3-2 | 24.4% | 1803 |
| Example 3-3 | 18.3% | 2204 |
| Example 3-4 | 20.8% | 2036 |
| Example 3-5 | 24.8% | 1906 |
| Example 4-1 | 18.5% | 1989 |
| Example 4-2 | 17.7% | 1758 |
| Example 4-3 | 19.3% | 1379 |
| Example 5-1 | 28.0% | 1845 |
| Example 5-2 | 25.3% | 1985 |
| Example 5-3 | 18.5% | 2119 |
| Example 5-4 | 22.6% | 1924 |
| Example 5-5 | 23.7% | 1902 |
| Example 5-6 | 26.4% | 1847 |
| Contrast Example 1-1 | 27.3% | 1749 |
| Contrast Example 1-2 | 24.2% | 1935 |
| Contrast Example 1-3 | 28.4% | 1645 |
| Contrast Example 1-4 | 27.5% | 1519 |
| Contrast Example 1-5 | 26.6% | 1132 |

The results of the Example 1 and the Example 2-1 to the Example 2-6 and the results of the Contrast Example 1-1 and the Contrast Example 1-2 show that the cyclic sulfate compound can form the films on the positive and negative electrode sides, thus the impedance of film formation on the positive and negative electrode interfaces can be reduced, and the more stable inorganic and organic mixed SEI film with high barrier capacity can be produced; and therefore, the polarization increase of the battery is avoided, furthermore, the impedance increase in the cycling process is further reduced, and the cycling performance of the battery cell is greatly improved. Moreover, compared with a conventional sulfonate additive, the SEI generated by the additive used in the present application at the negative electrode has higher stability and better effect.

The results of the Example 3-1 to the Example 3-5 show that in case of less cyclic sulfate compounds, the improvement effect is not obvious, and excessive cyclic sulfate compounds may cause thick films generated at the positive and negative electrodes, consequently, the polarization of the battery cell is increased, which influences the cycling performance of the battery cell to a certain extent. When the mass ratio of the cyclic sulfonate additive used in the present

application in the electrolyte solution is within the above preferred range, the battery cell will have better performance.

The results of the Example 4-1 to the Example 4-3 and the results of the Contrast Example 1-3 to the Contrast Example 1-5 show that the cyclic sulfate compound is added to ternary systems with different metal contents, such as $LiNi_{0.6}Co_{0.2}Mn_{0.2}O_2$, $LiNi_{0.8}Co_{0.1}Mn_{0.1}O_2$, and $LiNi_{0.9}Co_{0.55}Mn_{0.55}O_2$, the effects of relieving the increase of cycle impedance of the lithium ions and improving the cycling performance can be achieved.

The results of the Example 5-1 to the Example 5-6 show when the Dv50 of the positive electrode active material is too small, the specific surface area of the BET will be too large, thus the electrode will have more contact with the electrolyte solution, resulting in more interfacial side reactions, and increasing the cycle impedance of the battery cell. However, too high Dv50 will make the particles too large and there are more voids, which will make the compacted density of the electrode plate too low. Therefore, when the Dv50 of the positive electrode active material is within the above preferred range, it can reduce the polarization of the positive electrode side and ensure better battery performance under the condition of ensuring high voltage density.

Although the present application is described with reference to the preferred embodiments, without departing from the scope of the present application, various improvements may be made to it and parts therein may be replaced with equivalents. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A secondary battery, comprising a positive electrode plate and a non-aqueous electrolyte solution, wherein the non-aqueous electrolyte solution comprises an additive which comprises a cyclic sulfate compound having the structure shown in a general formula (I),

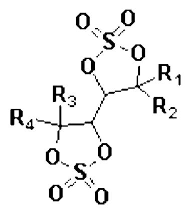

general formula (I)

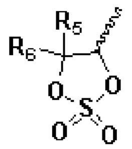

general formula (II)

wherein $R^1$, $R^2$, $R^3$ and $R^4$ are independently selected from any one of groups having the structure shown in a general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;

$R^5$ and $R^6$ are independently selected from any one of groups having the structure shown in the general formula (II), hydrogen atoms, halogen atoms, C1-C6 alkyl groups, C1-C6 haloalkyl groups, C1-C6 alkoxy groups, C1-C6 haloalkoxy groups, C2-C6 alkene groups, C2-C6 ester groups, cyano groups, and sulfonic acid groups;

$R^1$ and $R^2$ are not hydrogen atoms at the same time, and $R^3$ and $R^4$ are not hydrogen atoms at the same time;

the positive electrode plate comprises a positive electrode material layer containing positive electrode active materials, and the positive electrode active materials comprise ternary positive electrode materials; the ternary positive electrode materials are nickel-cobalt-manganese ternary materials and have the molecular formula of $Li_{1+a}[Ni_xCo_yMn_zM1_bM2_c]O_{2-d}N_d$, in which, the elements M1 and M2 are independently selected from at least one of Al, Zr, Ti, Mg, Zn, B, Ca, Te, Ce, and Fe, the element N is selected from at least one of F, Cl and S, and $0.5 \le x < 1$, $0 < y \le 0.3$, $0 \le z \le 0.25$, $-0.1 < a < 0.2$, $0 \le b < 0.3$, $0 \le c < 0.3$, $0 \le d < 0.2$, $0 \le b+c < 0.3$, $x+y+z+b=1$; and

the compacted density of the positive electrode plate is larger than 3.1 $cm^3$.

2. The secondary battery according to claim 1, wherein in the additive, $R^1$, $R^2$, $R^3$ and $R^4$ are independently selected from any one of groups having the structure shown in the general formula (II), hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups;

$R^5$ and $R^6$ are independently selected from any one of hydrogen atoms, halogen atoms, C1-C3 alkyl groups, C1-C3 haloalkyl groups, C1-C3 alkoxy groups, C1-C3 haloalkoxy groups, C2-C3 alkene groups, C2-C3 ester groups, cyano groups, and sulfonic acid groups;
optionally, $R^1$, $R^2$, $R^3$ and $R^4$ are independently selected from any one of groups having the structure shown in the general formula (II), hydrogen atoms, halogen atoms, C1-C3 alkyl groups and cyano groups;
optionally, $R^5$ and $R^6$ are independently selected from any one of hydrogen atoms and C1-C3 alkyl groups;
optionally, $R^1$, $R^2$, $R^3$ and $R^4$ are independently selected from any one of groups having the structure shown in the general formula (II), hydrogen atoms, F atoms, Cl atoms, Br atoms, methyl groups, ethyl groups, propyl groups, isopropyl groups and cyano groups;
optionally, $R^5$ and $R^6$ are independently selected from any one of hydrogen atoms, methyl groups, ethyl groups, propyl groups and isopropyl groups;
optionally, the groups having the structure shown in the general formula (II) are selected from any one of the following groups:

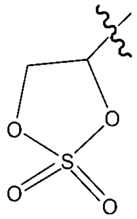 , 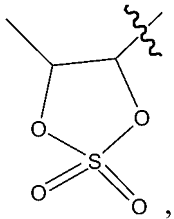 , 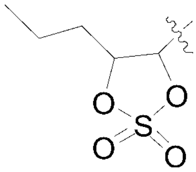 , 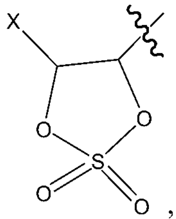 ,

wherein X refers to F atoms, Cl atoms or Br atoms;
optionally, the groups having the structure shown in the general formula (II) are selected from any one of the following groups:

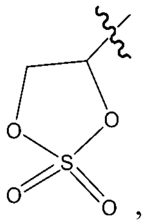 , 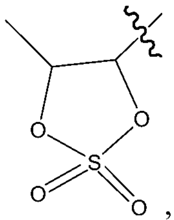 , 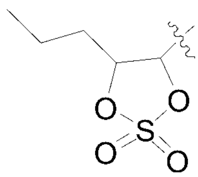 .

3. The secondary battery according to claim 1 or 2, wherein in the additive, the cyclic sulfate compound is selected from any one or more of the following compounds:

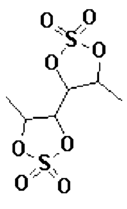 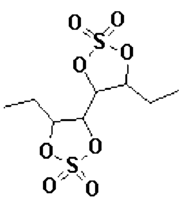 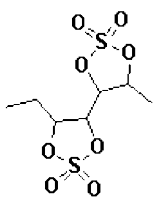 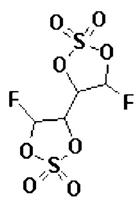 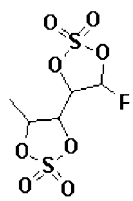

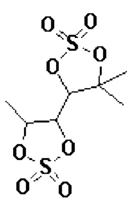 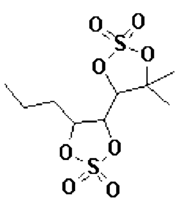 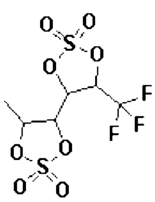 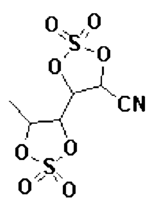 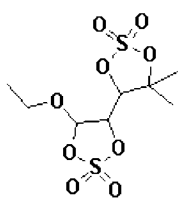

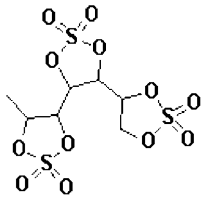 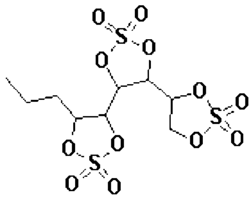 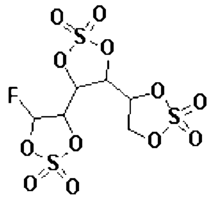 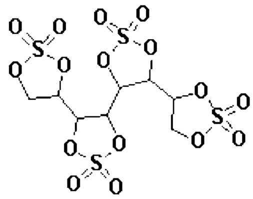 .

**4.** The secondary battery according to any one of claims 1 to 3, wherein the mass content of the cyclic sulfate compound in the non-aqueous electrolyte solution is W1, in which, 0.005%≤W1≤10%, optionally, 0.05%≤W1≤5%.

**5.** The secondary battery according to any one of claims 1 to 4, wherein the ternary materials have the molecular formula of $Li[Ni_xCo_yMn_z]O_2$, in which, 0.5≤x<1, 0<y≤0.3, 0≤z≤0.25, x+y+z=1; and optionally, the ternary materials comprise but are not limited to $LiNi_{0.5}Co_{0.3}Mn_{0.2}O_2$, $LiNi_{0.6}Co_{0.2}Mn_{0.2}O_2$, $LiNi_{0.8}Co_{0.1}Mn_{0.1}O_2$ and $LiNi_{0.9}Co_{0.055}Mn_{0.055}O_2$.

**6.** The secondary battery according to any one of claims 1 to 5, wherein the compacted density of the positive electrode plate is 3.3-4.1 g/cm$^3$, optionally, 3.4-3.8 g/cm$^3$.

**7.** The secondary battery according to any one of claims 1 to 6, wherein the average particle size Dv50 of the positive electrode active materials is 1-25 μm; and optionally, 2μm≤Dv50≤20μm, optionally, 2μm≤Dv50≤15μm.

**8.** An electrical apparatus, comprising a secondary battery, wherein the secondary battery comprises the secondary battery according to any one of claims 1 to 7.

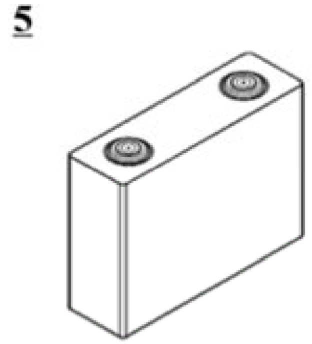


FIG. 1

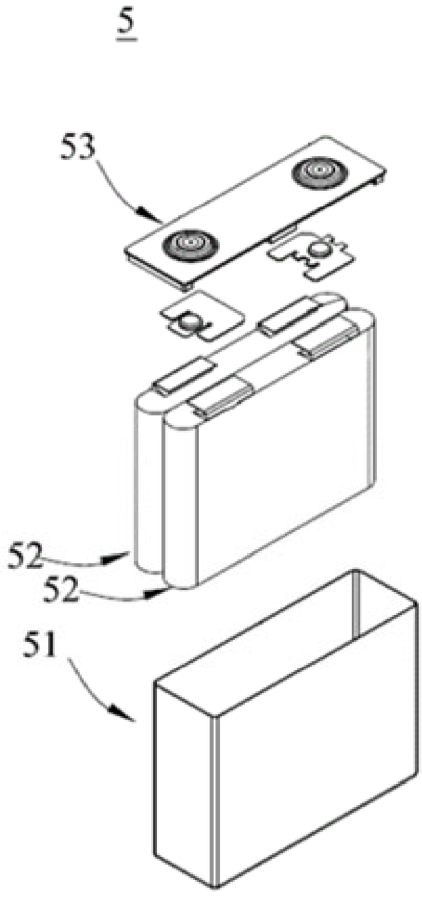


FIG. 2

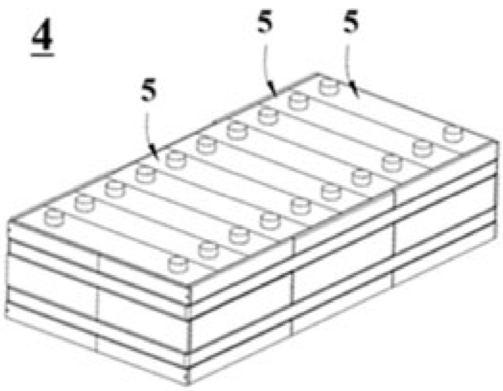


FIG. 3

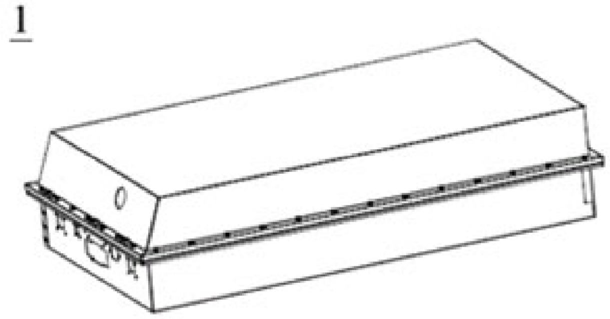


FIG. 4

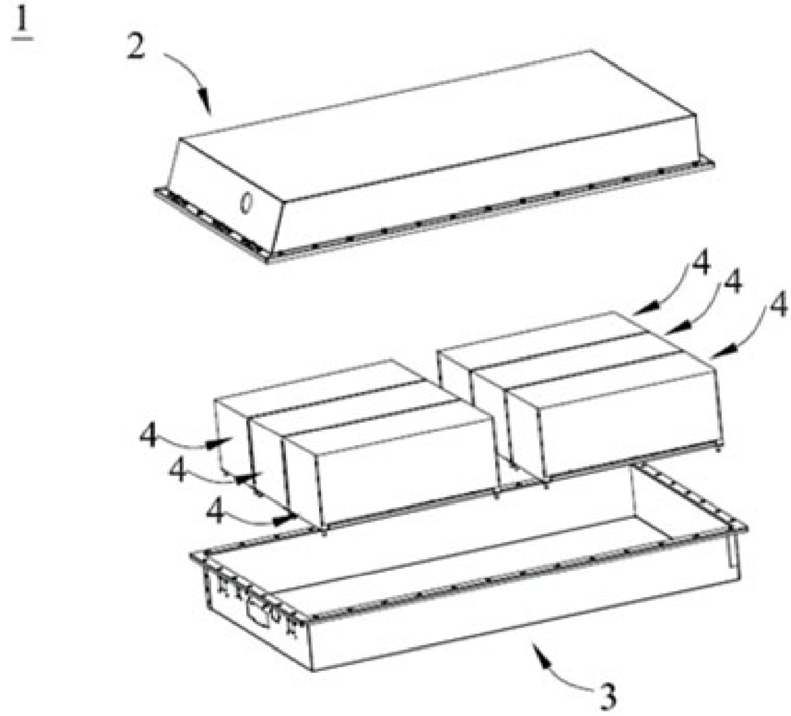


FIG. 5

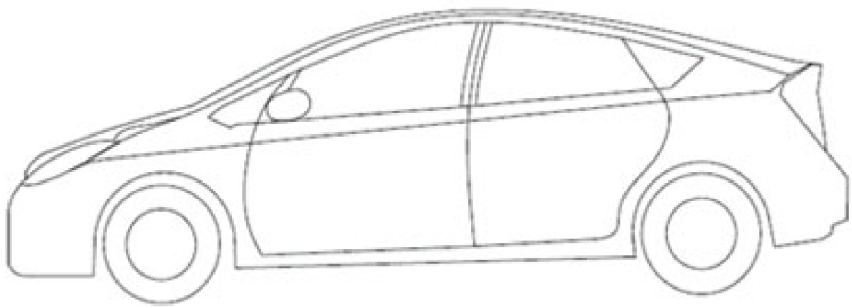

FIG. 6

**INTERNATIONAL SEARCH REPORT**

International application No. **PCT/CN2023/098308**

**A. CLASSIFICATION OF SUBJECT MATTER**

H01M10/0567(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 电解液, 电解质, 二次电池, 锂离子电池, 添加剂, 硫酸酯, 环, 取代基, 烷烃, 烷基, 氟, 卤素, electrolyte, secondar, batterie+, lithium 1w ion, additive, sulfat+, ring+, substituent, alkane, alkyl, fluoro, halogen

**C. DOCUMENTS CONSIDERED TO BE RELEVANT**

| Category* | Citation of document, with indication, where appropriate, of the relevant passages | Relevant to claim No. |
|---|---|---|
| Y | KR 20190133659 A (SAMSUNG SDI CO., LTD.) 03 December 2019 (2019-12-03) description, paragraphs 2-7 and 21-166 | 1-8 |
| Y | CN 104718658 A (GS YUASA INTERNATIONAL LTD.) 17 June 2015 (2015-06-17) description, paragraphs 17-59 | 1-8 |
| Y | CN 109950621 A (SHENZHEN CAPCHEM TECHNOLOGY CO., LTD.) 28 June 2019 (2019-06-28) description, paragraphs 34-82 | 1-8 |
| Y | CN 114122491 A (SHENZHEN CAPCHEM TECHNOLOGY CO., LTD.) 01 March 2022 (2022-03-01) description, paragraphs 37-87 | 1-8 |
| Y | CN 106252710 A (SK INNOVATION CO., LTD.) 21 December 2016 (2016-12-21) description, paragraphs 15-166 | 1-8 |
| A | CN 109037776 A (NINGDE CONTEMPORARY AMPEREX TECHNOLOGY CO., LTD.) 18 December 2018 (2018-12-18) entire document | 1-8 |

☐ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **10 October 2023** | **25 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/098308**

| Patent document cited in search report | | | Publication date (day/month/year) | Patent family member(s) | | | Publication date (day/month/year) |
|---|---|---|---|---|---|---|---|
| KR | 20190133659 | A | 03 December 2019 | KR | 102332336 | B1 | 29 November 2021 |
| CN | 104718658 | A | 17 June 2015 | US | 2015280282 | A1 | 01 October 2015 |
| | | | | EP | 2913880 | A1 | 02 September 2015 |
| | | | | EP | 2913880 | A4 | 18 May 2016 |
| | | | | EP | 2913880 | B1 | 10 January 2018 |
| | | | | WO | 2014068805 | A1 | 08 May 2014 |
| | | | | JPWO | 2014068805 | A1 | 08 September 2016 |
| | | | | JP | 6225914 | B2 | 08 November 2017 |
| CN | 109950621 | A | 28 June 2019 | PL | 3731325 | T3 | 21 February 2022 |
| | | | | WO | 2019119765 | A1 | 27 June 2019 |
| | | | | HUE | 059137 | T2 | 28 October 2022 |
| | | | | US | 2020313237 | A1 | 01 October 2020 |
| | | | | EP | 3731325 | A1 | 28 October 2020 |
| | | | | EP | 3731325 | A4 | 20 January 2021 |
| | | | | EP | 3731325 | B1 | 29 December 2021 |
| CN | 114122491 | A | 01 March 2022 | None | | | |
| CN | 106252710 | A | 21 December 2016 | KR | 20160144123 | A | 16 December 2016 |
| | | | | KR | 102451966 | B1 | 07 October 2022 |
| | | | | US | 2019067741 | A1 | 28 February 2019 |
| | | | | US | 2016359196 | A1 | 08 December 2016 |
| | | | | US | 10141608 | B2 | 27 November 2018 |
| CN | 109037776 | A | 18 December 2018 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 190772016 T


### Non-patent literature cited in the description


- *CHEMICAL ABSTRACTS*, 25289-20-7
- *CHEMICAL ABSTRACTS*, 2165939-88-6
- *CHEMICAL ABSTRACTS*, 2629309-49-3
- *CHEMICAL ABSTRACTS*, 1431298-10-0
- *CHEMICAL ABSTRACTS*, 7460-93-7
- *CHEMICAL ABSTRACTS*, 2236586-56-2